## Europäisches Patentamt
## European Patent Office
## Office européen des brevets

(19)

(11) Veröffentlichungsnummer: **0 161 656**
**B1**

(12) # EUROPÄISCHE PATENTSCHRIFT

(45) Veröffentlichungstag der Patentschrift:
24.02.88

(51) Int. Cl.⁴: **B 23 H 7/36**, B 23 H 7/02

(21) Anmeldenummer: **85105865.1**

(22) Anmeldetag: **13.05.85**

(54) **Vorrichtung für das Spülen der Erodierzone an funkenerosiven Schneidanlagen.**

(30) Priorität: 16.05.84 CH 2409/84
25.05.84 DE 3419628

(43) Veröffentlichungstag der Anmeldung:
21.11.85 Patentblatt 85/47

(45) Bekanntmachung des Hinweises auf die Patenterteilung:
24.02.88 Patentblatt 88/8

(84) Benannte Vertragsstaaten:
CH DE FR GB IT LI LU SE

(56) Entgegenhaltungen:
DE-A-2 833 765
DE-A-3 223 623

SOVIET INVENTIONS ILLUSTRATED, Sektionen P, Q, Woche K08, 6. April 1983, Derwent Publications Ltd. London, P 56
Seiten 390-393 des Handbuches der Dichtungstechnik, ISBN 3-88508-504-6

(73) Patentinhaber: AG für industrielle Elektronik AGIE Losone bei Locarno, CH- 6616 Losone/Locarno (CH)

(72) Erfinder: Budin, Joseph, Via Cadogno 3, CH- 6648 Minusio (CH)
Erfinder: Sciaroni, Boris, Via Vallemaggia 65b, CH- 6604 Locarno (CH)
Erfinder: Kilcher, Beat, Via Ronco 13, CH- 6611 Arcegno (CH)
Erfinder: Levy, Gideon, Via Locarno 52, CH- 6616 Losone (CH)

(74) Vertreter: EGLI- EUROPEAN PATENT ATTORNEYS, Widenmayerstrasse 5, D-8000 München 22 (DE)

EP 0 161 656 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung gemäß dem Oberbegriff des Patentanspruchs 1.

Die gattungsgemäße Vorrichtung ist aus der DE-OS-28 33 765. bekannt. Die Mittel zum Abdichten der Spülkammer gegen die Werkstückoberfläche bestehen bei der bekannten Vorrichtung aus einer sich an den Spülraum anschliessenden Dichtungsmembrane, welche auf der Werkstückoberfläche aufliegt. Gemäß SOVIET INVENTIONS ILLUSTRATED, Sektionen P.Q Woche k 08 6-April 1983, DERWENT PUBL. LTD., London, P-56, - SU-921 743 (IVASHKIN) - kann die Dichtungsmembrane auch ausgestaltet sein, daß sie einen torusförmigen Raum umgibt.

Beim funkenerosiven Schneiden mit band- oder drahtförmiger Elektrode wird die Elektrode zwischen zwei Führungsköpfen gespannt und von diesen geführt. Insbesondere beim Schneiden grosser Konuswinkel finden Führungsköpfe Anwendung, die auf die Schräglage des Drahtes orientiert sind. Dabei ist eine effiziente Spülung der Erodierzone besonders wichtig, weil mit starker Drahtschräglage sehr grosse Durchlaufstrecken des Drahtes im Werkstück entstehen und wegen der Kollisionsgefahr zwischen den schwenkbaren Drahtführungsköpfen und dem Werkstück häufig vergrößerte Führunskopfdistanzen eingehalten werden müssen.

Für die eingangs genannte Spülvorrichtung müssen Eigenschaften gefordert werden, welche ihre Verwendung weitere Erschwernis beim Einrichten für konischen wie für zylindrischen Schnitt wie auch bei eventuellen Nachschneidetechniken ermöglicht.

Zur Zeit der Einführung funkenerosiver Schneidanlagen wurde die Arbeitsstelle allgemein nur mit seitlichen Strahldüsen gespült. Praktische Erfahrungen bei komplexen Werkstücken führten dann aber sehr bald zur Forderung nach einer verbesserten Spülung. Eine große Verbesserung konnte mittels der sogenannten "Koaxialspülung" erzielt werden. Diese hat sehr rasch Verbreitung gefunden und ist in der DE-OS-24 08 715 beschrieben. Bei der später erfolgten Einführung des konischen Schneidens mit mässigen Winkellagen wurde dieses Spülverfahren überwiegend beibehalten, weil in der Regel auch die Führungsköpfe in ihrer starren auf den zylindrischen Schnitt bezogenen Anordnung beibehalten worden sind. Um die Spülwirkung weiter zu forcieren, gab es in der Folge eine Anzahl Detailverbesserungen. Beispielsweise erhielt das in der oben erwähnten DE-OS-24 08 715 beschriebene Mundstück spezielle Düsengestalt siehe z. B. (DE-OS-28 09 506). Ferner wurden derartige Düsenmundstücke mit dem Drahtführungskopf zu einer geschlossenen Einheit zusammengefaßt, die zusätzlich auch der Stromübertragung an das Werkstück dienen konnte.

Alle vorerwähnten Führungen haben den Nachteil, daß sie bei einer größeren Distanz zwischen Strahlaustritt und Schnittstellenbeginn am Werkstück einen Versatz zwischen Spülachse und Drahtachse zeigen. Die genannte größere Distanz ist aber beim konischen Schneiden mit größerem Konturneigungswinkel notwendig. Hinzu kommt, daß der genannte Versatz mit grösser werdendem Konturneigungswinkel wächst. Als Folge des Versatzes, d.h. der einseitigen Ablenkung des Spülstrahls, trifft ein grösserer Querschnitt des koaxialen Strahls einseitig von der Drahtelektrode auf die Werkstückoberfläche auf, wird dort in die einseitige Richtung verdrängt und führt durch die entstehende Strömungsbeschleunigung zum Ansaugen von Luft. Diese wird dann mit in die Arbeitsstrecke gezogen.

Solche Luftstörungen können an sich durch größere Koaxialströmungsquerschnitte oder durch Arbeiten im Wasser-Bad unterbunden werden. Eine solche Lösung ist aber technisch unbefriedigend, weil - abgesehen vom größeren Wasserverbrauch und der damit in größerem Masse verteilten Nebenelektrolyse - der Aufwand für Nebenzeiten und Spritzschutz stört. Spritzschutzmaßnahmen wurden auch besonders notwendig, nachdem die Spülung der Erodierzone durch Anwendung höherer Spüldrücke verstärkt würde. Dabei wurde die Arbeitszone z. B. von einer Richtung druckgespült und von der anderen Richtung sauggespült (siehe z. B. DE-PS-28 33 765).

Gemäß einem weiteren Vorschlag (JP-OS-56-114 628) kann das Mundstück der Koaxialspüldüse entsprechend der Schräglage des Drahtes orientiert werden und die Orientierung bei Veränderung des Schneidvektors durch eine numerische Steuerung für die Schnittbahn entsprechend mitgeführt werden. Gegenüber den erstbeschriebenen Lösungen dürfte unter erheblichem Mehraufwand zwar eine gewisse Verbesserung in der Qualität der Erodierstrecke erreichbar sein; es bleibt aber der Nachteil erhalten, daß der schräg auf den Drahteintritt am Werkstück mündende Spülstrahl wiederum einseitig abgelenkt wird und damit weiterhin die Gefahr des Ansaugens von Luft besteht.

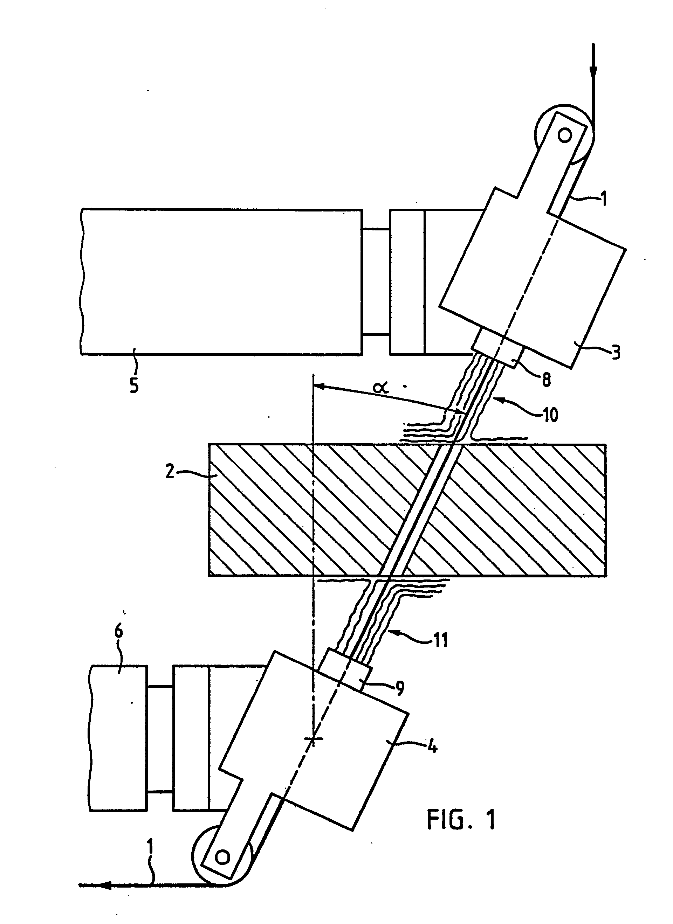

Aus der WO 80/02395 sind orientierte Führungsköpfe, die kardanisch an Tragarmen aufgehängt sind, bekannt (s.a. Erläuterung zur Fig. 1 in vorliegender Erfindungsbeschreibung). Die Kombination dieser orientierten Führungsköpfe nebst Düsenmundstücken, aus denen jeweils ein Spülstrahl zur Arbeitsstrecke bewegt wird, und der o.g. bekannten Spültechnik behebt jedoch nicht die Schwierigkeiten der vorbeschriebenen Lösungen mit starren Spülköpfen. Denn bei dieser Kombination entweicht die Flüssigkeit aus der Spülströmung erheblich leichter an der stumpfwinkligen Auftreffstelle des Spülstroms auf die Eintrittstelle des Drahtes am Werkstück als auf der gegenüberliegenden spitzwinkligen Seite. Dies führt zu den bereits angesprochenen Unterdruckeffekten und dem Ansaugen von Luft auf der spitzwinkligen Seite. Durch die orientierten Führungsköpfe können relativ gut grosse Konturneigungswinkel α geschnitten werden, jedoch nimmt die Länge des Schnittspaltes im Werkstück mit grösser werdender Schräglage zu. Ferner muß die Distanz zwischen Führungsmittel und Werkstück eher groß gehalten werden um die Schwenkbarkeit der Führungsköpfe nicht zu beeinträchtigen.

Die Erfindung befaßt sich mit der Aufgabe, die gattungsgemäße Vorrichtung dahingehend weiterzuentwickeln, daß auch bei Schrägstellungen der Spülvorrichtung ein ungestörter Spülstrom im Arbeitsbereich sichergestellt ist.

Erfindungsgemäß wird diese Aufgabe durch den im Patentanspruch 1 angegebenen Gegenstand gelöst.

Zwar ist aus der DE-OS-32 23 623 bereits eine Vorrichtung für das Spülen der Erodierzone einer funkenerosiven Schneidanlage bekannt, bei welcher ein Abdichtring aus elastischem Material die Werkstückoberfläche im Bereich der Erodierzone berührt. Der Abdichtring ist an dem der Werkstückoberfläche zugewandten Ende einer starren Absaugkappe befestigt, dichtet also den Innenraum der Absaugkappe gegen die Werkstückoberfläche ab. Auch umschließt die Absaugkappe eine drahtförmige Elektrode. Die Absaugkappe selbst weist aber keine Mittel zur Lösung des Dichtproblems bei Schräglagen der Spülvorrichtung auf. Sie ist daher mit den gleichen Nachteilen behaftet, wie der eingangs genannte Stand der Technik.

Darüber hinaus ist an sich bereits eine Axial-Gleitringdichtung als Wellendichtung bekannt, die aus einen axial auf der Welle gleitenden Gleitring und einem sich daran anschließenden Gummibalg besteht (Handbuch der Dichtungstechnik/Edgar Schmid ..., S. 390-393, insbesondere Bild 13.4).

Weitere bevorzugte Ausführungsformen der Erfindung ergeben sich aus den Ansprüchen 2 bis 15. Hinsichtlich des Anspruchs 9 ist noch anzumerken, daß ein kombiniertes Hoch- und Niederdruck-Spülsystem grundsätzlich bereits aus der DE-OS-31 09 722 bekannt ist.

Insgesamt wird mit der Erfindung der Vorteil einer effizienten Spülung an der Erodierstrecke im Werkstück erreicht. Durch besondere Spülmundstücke läßt sich die Spülströmung näher an das Werkstück heranführen. Ferner läßt sich durch auf die Schräglage anpaßbare Spülkammern der Zutritt von Luft verhindern. Gleichzeitig wird eine Mantelspülstrahl gebildet, der es gestattet, den Kernspülstrahl auf die Dimensionen der Schnittzone zu konzentrieren und ihn damit effizienter zu machen.

Ausführungsbeispiele der Erfindung werden im folgenden anhand der schematischen Figuren näher beschrieben.

Es zeigen:

Fig. 1 die Darstellung einer Ausbildung gemäß dem Stand der Technik

Fig. 2 ein Mantelstrahlspülsystem mit auf die Drahtschräglage orientierter Abdichtung,

Fig. 3a, b vereinfachte Ausführungsformen von Spülsystemen

Fig. 4a, b, c Ausführungsformen von Düsenmundstücken fur den Kernstrahl mit Zusatzspülquerschnitt zum Ausgleich der Abströmverluste im Schneidspalt,

Fig. 5 ein Mantelstrahl-Spülsystem mit Zusatzspülquerschnitt und Orientierbarkeit auf die Schnittlage, und

Fig. 6 ein Mantelstrahl-Spülsystem mit abgeschlossenem Kernspülstrahl.

Fig. 1 zeigt eine bekannte Spülanordnung. Eine Drahtelektrode 1 hat einen Konturneigungswinkel α gegenüber dem Werkstück 2. Deren Schnittrichtung verläuft in der Papierebene. Orientierte Führungsköpfe 3 und 4 sind kardanisch an Tragarmen 5 und 6 aufgehängt. An den orientierten Führungsköpfen 3, 4 sind Düsenmundstücke 8, 9 vorgesehen, aus denen jeweils ein Spülstrahl 10, 11 zur Arbeitsstrecke bewegt wird.

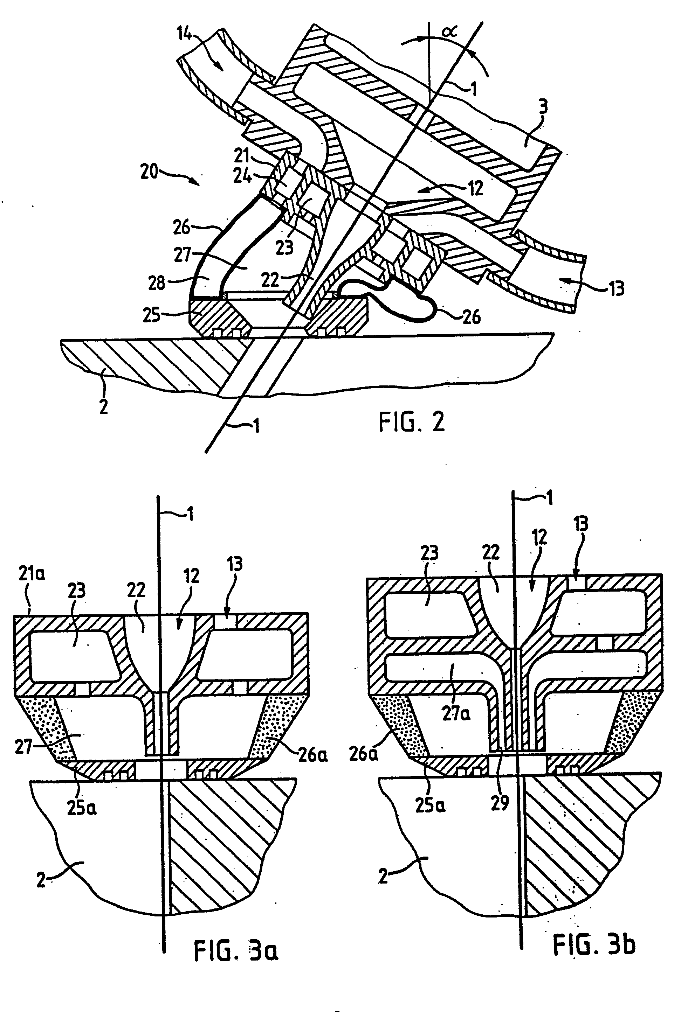

In Fig. 2 sind ausschnittweise das Werkstück 2 und der obere Führungskopf 3 gezeigt. Die Drahtelektrode 1 schneidet mit dem Konturneigungswinkel α. Die gleiche Anordnung kann auf der Unterseite des Werkstückes 2 benutzt werden, und es wird darum auf die doppelte Darstellung verzichtet. Die dem Werkstück 2 zugewandte Seite des Führungskopfes 3 ist mit drei Spülanschlüssen 12, 13, 14 ausgestattet, wobei der Schlauchanschluss für den Spülanschluss 12 nicht in der Bildebene liegt und darum nicht gezeichnet ist. Die Arbeitsweise der Vorrichtung mit diesen Spülanschlüssen 12 bis 14 wird nach der Beschreibung der Konstruktion des Führungskopfes 3 erläutert.

Ein Spülsystem 20 kann stirnseitig an den Führungskopf 3 angeschlossen werden, so daß die verschiedenen Spülanschlüsse 12-14 mit dem Spülsystem 20 zusammenwirken. Das Spülsystem 20 besteht aus einem Spüldüsenkörper 21, bei dem um die zentrale Koaxialspüldüse 22 zusätzlich eine erste und eine zweite Ringkammer 23, 24 i.w. koaxial angeordnet sind. Flach aufliegend auf der Oberfläche des Werkstückes 2, und zwar trotz der jeweiligen Schräglage des Führungskopfes 3 gegenüber dem Werkstück 2, befindet sich ein Gleitring 25, der stirnseitig an der Auflagefläche verschiedene Ringrillen besitzt, in denen das Arbeitsmedium als gleitfördernde Schmierung wirkt. Er ist aus einem Werkstoff gefertigt, der ausser Verschleissarmut gute Gleiteigenschaften auf metallischen Oberflächen zeigt. Dieser Gleitring wird in seiner kegeligen Innenbohrung durch Anschlag an die Koaxialspüldüse 22 entsprechend dem Arbeitsfortschritt mitgenommen. Mit dem Spüldüsenkörper 21 ist der Gleitring 25 über eine elastische Ringmanschette 26 verbunden, die eine dicht abschliessende dritte Ringkammer 27 um die Koaxialspüldüse 22 bildet. Die Ringmanschette 26 ist ebenfalls in Form einer vierten Ringkammer 28 ausgeführt, die über die zweite Ringkammer 24 an den Spülanschluss 14 angeschlossen ist.

Das ganze Spülsystem 20 schafft im praktischen Einsatz eine dauernde kammerartige Verbindung zwischen dem Führungskopf 3 und der Eintrittsstelle des Spülstrahls sowie der Drahtelektrode 1 in die Arbeitsstrecke des Werkstückes 2. Es kann sich durch die Ringmanschette 26 an jede dem Konturneigungswinkel $\alpha$ entsprechende Schräglage anpassen. Über den Spülanschluss 14 kann dabei die vierte Ringkammer 28 in der Ringmanschette 26 mit Druckmedium so beaufschlagt werden, daß die gewünschte Schrägstellung des Führungskopfes 3 relativ zum Werkstück 2, und damit zum Gleitring 25, sichergestellt ist. Bei Bedarf kann selbstverständlich statt eines Überdrucks auch ein Unterdruck eingesetzt werden. Es hat sich für den Einsatz bei grosswinkligen Bearbeitungen als vorteilhaft erwiesen, die vierte Ringkammer 28 am Umfang in viele 1...n einzelne Kammern aufzuteilen, so daß die zum Führungskopf 3 relative Schrägstellung des Gleitrings 25 durch entsprechende Beaufschlagung der vielen 1...n Ringkammern durch eine entsprechend grössere Anzahl 1...n von am Fuhrungskopf 3 angeordneter Spulanschlusse 14 mit Druck bzw. Unterdruck gesteuert werden kann.

Durch die Koaxialspüldüse 22 wird vom Spülanschluss 12 der an sich bekannte Koaxialspülstrahl aufgebracht. Zur Erreichung höherer Spüleffizienz kann dabei ein höherer Spüldruck eingesetzt werden, wozu jedoch der Durchmesser dieses Spülstrahls zweckmäßigerweise relativ klein gewählt wird, damit einerseits ein sauberer Eintritt dieses Koaxialspülstrahls in die Spaltweite der Bearbeitungsstrecke gelingt und andererseits aus wirtschaftlichen Gründen nicht ein zu hoher Wasserverbrauch entsteht. Je höher dieser im folgenden koaxialer "Kernstrahl" genannte Spülstrahl durch entsprechenden Einsatz von Spüldruck beschleunigt wird, desto grösser ist die Gefahr von Seitenablenkungen und Unterdruckerzeugung an seiner Auftreffstelle auf das Werkstück 2. Aus diesem Grunde wird durch den Spülanschluss 13 und die im Spüldüsenkörper 21 angeordnete erste Ringkammer 23 die die Koaxialspüldüse 22 umgebende dritte Ringkammer 27 mit Spülmedium vergleichsweise geringen Druckes gefüllt. Hierdurch wird die ganze Umgebung des aus der Koaxialspüldüse 22 austretenden koaxialen Kernspülstrahls von einem Mantelstrahl gleichen Spülmediums umgeben. Ein Ansaugen von Luft, das zu Drahtrissen und Fehlentladungen in der Arbeitsstrecke führt, wird hierdurch verhindert. Ausserdem kann durch das Mantelspülmedium eine bessere Füllung des Bearbeitungsspaltes sowie eine Kompensierung von Abströmverlusten in bereits geschnittenen Zonen erreicht werden.

In der Fig. 3a ist eine vereinfachte Version des Spülsystems 20 dargestellt, bei dem der Spüldüsenkörper 21a neben der Koaxialspüldüse 22 nur die erste Ringkammer 23 besitzt. Der Mantelstrahl um den Kernspülstrahl wird wiederum durch die nachgeschaltete dritte Ringkammer 27 geformt. Der Gleitring 25a ist nur über eine kammerlose Ringmanschette 26a an diesen vereinfachten Spüldüsenkörper 21a angeschlossen. Die Zeichnung bezieht sich auf eine momentane zylindrische - im Gegensatz zu konische - Schnittlage der Drahtelektrode 1 im Werkstück 2. Aufgrund der Elastizität der Ringmanschette 26a kann das Spülsystem jedoch selbsttätig die Anlage des Gleitrings 25a auf dem Werkstück 2 auch bei Schräglagen sicherstellen; auch aufgrund der mit der konischen Ausführung der Ringmanschette 26a progressiv steigenden Anpresskräfte. Die Mitnahme des Gleitrings 25a entsprechend dem Arbeitsfortschritt kann in diesem Fall durch die Ringmanschette 26a - statt durch die Koaxialspüldüse 22 - erfolgen, da diese Ringmanschette 26a vorteilhaft kegelig mit grösserem Durchmesser als der Gleitring 25a ausgeführt wird.

In der Fig. 3b ist eine gegenüber Fig. 2 ebenfalls vereinfachte Ausführung des Spülsystems 20 dargestellt, das jedoch gegenüber Fig. 3 abgewandelt ist. Die dritte Ringkammer 27a ist hier an ihrem dem Werkstück 2 zugekehrten Ende zu einer koaxial um die Koaxialspüldüse 22 angeordneten Mantelspüldüse 29 geformt. Eine derartige Mantelspüldüsenanordnung kann auch in Verbindung mit der Vorrichtung gem. Fig. 2 realisiert werden.

Ein Problem bei der funkenerosiven Bearbeitung, das bereits in Verbindung mit der Beschreibung zu Fig. 2 kurz angedeutet wurde, sind die Abströmverluste im Schneidspalt, und zwar rückwärts in die von der Drahtelektrode 1 bereits durchschnittene Zone. Wenn eine Koaxialspülung von der Unterseite und der Oberseite des Werkstückes 2 erfolgt, stossen im Inneren des Werkstückes 2 zwei Spülströmungen aufeinander, die sich besonders im Falle von Schrägschnitten gegenseitig nach rückwärts abstossen und durch die sich additiv überlagernden Strömungsmengen aus den beiden Strömungsrichtungen zu einer starken Strömungsbeschleunigung und damit zu Unterdruck führen.

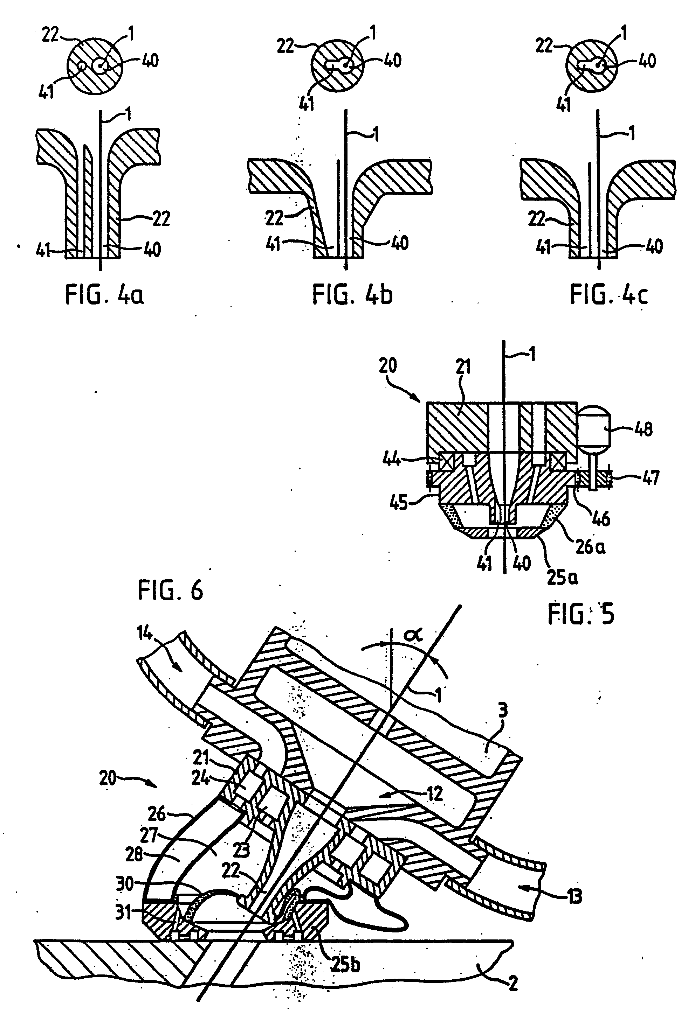

Anhand der Fig. 4 und 5 werden Ausführungsbeispiele zur Lösung dieses Problems beschrieben. Dabei wird der Kernspülstrahl aus der Koaxialspüldüse 22 nicht ausschliesslich rund geformt, sondern er erhält eine Ausformung derart, dass der bereits durchlaufende Schnittspalt im Werkstück stärker mit Spülmedium gefüllt wird.

Die Fig. 4a zeigt am Querschnittbild des Mundstückes der Koaxialspüldüse 22 einen zentrisch angeordneten Spülkanal 40 um die Drahtelektrode 1 und versetzt dazu eine weitere Druckspülbohrung 41. Wie sich aus dem Vertikalschnitt darunter ergibt, verläuft die Druckspülbohrung 41 achsparallel zur Koaxialspülbohrung 40.

Die Fig. 4b und 4c zeigen zwei weitere Ausführungen von Koaxialspüldüsen 22. Bei ihnen steht die zusätzliche Druckspülbohrung 41 über einen Schlitz mit dem Spülkanal 40 in Verbindung. Im Fall der Fig. 4b erhält der Schlitz durch konische Einmündung zum Düsenmundstück eine verstärkte Anlagewirkung an den Kernspülstrahl aus dem Spülkanal 40, während er bei der Fig. 4c eine parallele Mündung zum Koaxialspülstrahl 40 aufweist.

Damit der Zusatzspülstrahl immer gemäss seiner Zweckbestimmung den von der Drahtelektrode 1 bereits geschnittenen Spalt im Werkstück 2 erreicht, wird das Düsenmundstück entsprechend dem momentanen Schnittsektor stets so gedreht, dass die Druckspülbohrung 41 unmittelbar hinter der durch schnittenen Strecke steht. Gemäss Fig. 5 wird dazu das Spülsystem 20 im Spüldüsenkörper 21 zweiteilig ausgeführt. Über eine Lagerung 44 wird ein drehbarer Gehäuseteil 45 angeflanscht, der alle Spülkanalanschlüsse über abgedichtete Ringkanäle übernehmen kann. Der drehbare Gehäuseteil 45 trägt aussen eine Verzahnung, die durch ein Ritzel 47 auf der Achse eines Motors 48 antreibbar ist. In der gezeichneten Ausführung ist der Gleitring 25a nach der vereinfachten Version gemäss Fig. 3 über eine Ringmanschette 26a angeschlossen. Die Steuerung des Motors 48 erfolgt derart, dass sich der drehbare Gehäuseteil 45 und mit diesem der Zusatzspülstrahl 41 immer über der von der Drahtelektrode 1 bereits durchschnittenen Spaltstrecke befindet. Die Steuersignale können von einer in der Regel ohnehin vorhandenen numerischen Steuerung abgeleitet werden.

Fig. 6 zeigt eine weitere Ausführungsart des Spülsystems 20, welche der Ausführung nach Fig. 2 verwandt ist. Der Gleitring 25b wird jedoch nicht an der Koaxialspüldüse 22 abgestützt, sondern von ihr durch einen weiteren Manschettenring 30 formschlüssig gehalten. Wegen des Manschettenringes 30 sind die stirnseitigen Ringnuten über einen Bohrungsanschluss 31 mit der Ringkammer 27 verbunden. Das durch die Ringnuten zwischen den Gleitring 25b und das Werkstück 2 eingepresste Spülmedium wirkt einerseits als Verschluss gegen nachdrangende Luft. Andererseits tritt es auch teilweise in den geschnittenen erodierten Spalt ein. Vorzugsweise dient es aber in dieser Ausführungsart dazu, die Gleiteigenschaften des Gleitrings 25b auf der Werkstückoberfläche zu verbessern. Bei dieser Ausführungsart und bei entsprechender Drosselung der Strömungen in den Bohrungen 31 im Gleitring 25b kann die Ringmanschette 26 auch ohne vierte Kammern 28 ausgebildet sein. Denn der Druck in der Ringkammer 27 kann über den Spüldruck am Spülanschluss 13 unter Berücksichtigung der Abströmwirkung durch die Bohrungen 31 gesteuert werden.

Anstatt der beschriebenen elastischen Membranen können auch Zug- bzw. Druckfedern in Verbindung mit einfachen Membranmaterialien zur Anwendung kommen. Die beschriebenen Drahtführungsköpfe 3 mit vorgebautem Spülsystem 20 sind vorzugsweise auf der Oberseite und der Unterseite des Werkstückes 2 paarweise angeordnet. Sie können beide als Drucksystem, als Einspritzsystem oder wahlweise auch als Absaugsystem benutzt werden. Die Steuerung der Druckniveaus und der Mengen an den Spülanschlüssen 12, 13, 14 kann in bekannter Weise erfolgen. Als Spülmedium können Flüssigkeiten vorgesehen sein; zur Füllung der Kammern in den elastischen Ringmanscheten 26 aber auch Gase bzw. Luft. Wenn das Druckniveau für den Mantelspülstrahl in der Ringkammer 27 entsprechend gesteuert wird, kann automatisch sichergestellt werden, dass sich die elastische Ringmanschette 26 an der spitzwinkligen Seite des Drahteinlaufes gegenüber dem Werkstück immer nach aussen beult, so dass keine störende Abstützung der Koaxialspüldüse 22 auf den Gleitring 25 eintritt.


**Patentansprüche**

1. Spülvorrichtung zum Spülen der Erodierzone einer funkenerosiven Schneidanlage mit
a) einer an die Erodierzone heranführbaren, eine draht- oder bandformige Elektrode (1) umschliessenden Spülkammer (20),
b) Mitteln (12, 13, 14, 21, 23) zur Zufuhr eines Spülmittels in die Spülkammer (20), wobei die Zufuhrmittel (12, 13, 14, 21, 23) auf der dem Werkstück (2) abgelegenen Seite der Spülkammer (20) angeordnet sind, und
c) Mitteln für eine dichtende Auflage der Spülkammer (20) auf der Werkstückoberfläche im Bereich der Erodierzone,
dadurch gekennzeichnet, daß
d) die Auflagemittel einen am dem Werkstück (2) zugewandten Ende der Spülkammerwandung (26) angeordneten Gleitring (25; 25a; 25b) aufweisen, und
e) die Spülkammerwandung (26) derart an unterschiedliche Schräglagen der Spülvorrichtung, daß der anpassbar ist, Gleitring (25; 25a; 25b) hierbei die Spülkammer (20) gegen die Werkstückoberfläche abdichtet.

2. Vorrichtung nach Anspruch 1, dadurch gekennzeichnet, daß die Spülkammer (20) steuerbare Anpaß-Elemente (24, 26, 28; 26a) zu ihrer Formanpassung an die Schräglagen der Spülvorrichtung aufweist.

3. Vorrichtung nach Anspruch 2, dadurch gekennzeichnet, daß die steuerbaren Anpaß-Elemente (28) eine Zuleitung (14) zum Anschluß an einen Kreislauf für das Spülmedium aufweisen.

4. Vorrichtung nach einem der vorstehenden Ansprüche, dadurch gekennzeichnet, daß ein Anpaß-Element als eine im wesentlichen die Spülkammerseitenwandung bildende elastische, ringartige Manschette (26; 26a) ausgebildet ist.

5. Vorrichtung nach Anspruch 4, dadurch gekennzeichnet, daß die Manschette (26) in ihrem Inneren hohle Kammern (28) aufweist, die in fluidischer Verbindung (14, 24) mit einer drucksteuerbaren Fluidquelle stehen.

6. Vorrichtung nach Anspruch 4, dadurch gekennzeichnet, daß das gesamte Innere der Manschette (26) als eine ringförmige Kammer (28) ausgebildet ist und die Kammer (28) in fluidischer Verbindung (14, 24) mit einer drucksteuerbaren Fluidquelle steht.

7. Vorrichtung nach Anspruch 4, dadurch gekennzeichnet, daß die Wandstärke der Manschette (26a) in der zum Gleitring (25a) weisenden Richtung abnimmt.

8. Vorrichtung nach einem der vorstehenden Ansprüche, dadurch gekennzeichnet, daß die Spülkammer (20) eine Spüldüse (22) zur Abgabe eines auf die Erodierzone gerichteten Spülstrahls aufweist.

9. Vorrichtung nach Anspruch 8, dadurch gekennzeichnet, daß die Spüldüse (22) zur Abgabe eines Hochdruck-Spülstrahls ausgelegt und von einer Mantelspülduse (29) konzentrisch umgeben ist.

10. Vorrichtung nach Anspruch 8, dadurch gekennzeichnet, daß die Spüldüse (22) Strahlformelemente (40, 41) zur gezielten Spülung der eigentlichen Erodierzone und zusätzlich auch benachbarter Zonen des Schneidkanals aufweist.

11. Vorrichtung nach Anspruch 10, dadurch gekennzeichnet, daß mindestens ein der Werkstückoberfläche zugewandter Teil (45) der Spülkammer (20) um die Achse der Elektrode (1) drehbar ist.

12. Vorrichtung nach Anspruch 11, dadurch gekennzeichnet, daß Antriebselemente (48) zur gesteuerten Verdrehung des der Werkstückoberfläche zugewandten Teils (45) der Spülkammer (20) vorgesehen sind.

13. Vorrichtung nach Anspruch 8, dadurch gekennzeichnet, daß die Vertikalabmessungen der Spüldüse (22) und des Gleitringes (25; 25b) so aufeinander abgestimmt sind, daß die Spüldüse (22) bei ihrer Vorschubbewegung gegen den Gleitring (25; 25b) anliegt.

14. Vorrichtung nach einem der vorstehenden Ansprüche, dadurch gekennzeichnet, daß der Gleitring (25b) auf der dem Werkstück zugewandten Oberfläche mindestens eine Nut aufweist.

15. Vorrichtung nach einem der Ansprüche 8 bis 14, dadurch gekennzeichnet, daß der Spüldüsenmündungsbereich über einen flexiblen Manschettenring (30) mit der Innenwand des Gleitrings (25b) und die dem Werkstück (2) zugewandte Oberfläche des Gleitrings (25b) über einen Versorgungskanal (31) mit dem Spülmittelkreislauf verbunden ist.

**Claims**

1. Flushing device for flushing the erosion zone of a spark erosion cutting machine and having
a) a flushing chamber (20), which can be guided along the erosion zone, surrounding a wire- or ribbon-shaped electrode (1),
b) means (12, 13, 14, 21, 23) for the supply of a flushing agent into the flushing chamber (20), the supply means (12, 13, 14, 21, 23) being arranged on the side of the flushing chamber (20) remote from the work piece (2), and
c) means for supporting the flushing chamber (20) on the work piece surface in a sealed manner in the region of the erosion zone,
characterised in that
d) the support means have a slide ring (25; 25a; 25b) arranged at the end of the flushing chamber wall (26) facing the work piece (2), and
e) the flushing chamber wall (26) is adaptable to different oblique positions of the flushing device in such a way that the slide ring (25; 25a; 25b) thereby seals the flushing chamber (20) against the work piece surface.

2. Device according to claim 1, characterised in that the flushing chamber (20) has controllable adapting elements (24, 26, 28; 26a) to enable it to conform to the oblique positions of the flushing device.

3. Device according to claim 2, characterised in that the controllable adapting elements (28) have a supply pipe (14) for connection to a circuit for the flushing medium.

4. Device according to one of the above claims, characterised in that one adapting element is formed as an elastic annular sleeve (26; 26a), essentially forming the flushing chamber side wall.

5. Device according to claim 4, characterised in that the sleeve (26) has hollow chambers (28) in its inner region, which are in fluid communication (14, 24) with a pressure-controllable fluid source.

6. Device according to claim 4, characterised in that the entire inner region of the sleeve (26) is formed as an annular chamber (28) and the chamber (28) is in fluid communication (14, 24) with a pressure-controllable fluid source.

7. Device according to claim 4, characterised in that the wall thickness of the sleeve (26a) decreases in the direction towards the slide ring (25a).

8. Device according to one of the above claims, characterised in that the flushing chamber (20) has a flushing nozzle (22) for delivering a flushing jet directed onto the erosion zone.

9. Device according to claim 8, characterised in that the flushing nozzle (22) is arranged to deliver a high-pressure flushing jet and is coaxially encircled by a casing flushing nozzle (29).

10. Device according to claim 8, characterised in that the flushing nozzle (22) has jet-forming elements (40, 41) for the concerted flushing of the erosion zone itself and also adjacent zones of the cutting gap.

11. Device according to claim 10, characterised in that at least one part (45) of the flushing chamber (20), facing the work piece surface, can be rotated about the axis of the electrode (1).

12. Device according to claim 11, characterised in that drive elements (48) are provided for the controlled rotation of the part (45) of the flushing chamber (20) facing the work piece surface.

13. Device according to claim 8, characterised in that the vertical dimensions of the flushing nozzle (22) and of the slide ring (25; 25b) are so matched to one another that during advance movement of the flushing nozzle (22), the latter lies against the slide ring (25; 25b).

14. Device according to one of the above claims, characterised in that the slide ring (25b) has on the surface facing the work piece at least one groove.

15. Device according to one of claims 8 to 14, characterised in that the flushing nozzle opening region is coupled via a flexible sleeve ring (30) to the inner wall of the slide ring (25b) and the surface of the slide ring (25b) facing the work piece (2) is coupled via a supply channel (31) to the flushing agent circuit.

**Revendications**

1. Dispositif de rinçage pour un rinçage de la zone d'érosion d'une installation de découpage par électro-érosion comportant:
   a) une chambre de rinçage (20) pouvant être guidée jusqu'à la zone d'érosion et entourant une électrode (1) sous forme de fil ou de bande,
   b) des moyens (12, 13, 14, 21, 23) pour introduire un agent de rinçage dans la chambre de rinçage (20), les moyens d'introduction (12, 13, 14, 21, 23) étant disposés sur le côté de la chambre de rinçage (20) qui est opposé à la pièce (2), et
   c) des moyens pour assurer une application étanche de la chambre de rinçage (20) contre la surface de pièce dans la région de la zone d'érosion,
   caractérisé en ce que:
   d) les moyens d'application comportent un anneau de glissement (25; 25a; 25b) disposé à l'extrémité, dirigée vers la pièce (2), de la paroi (26) de la chambre de rinçage, et
   e) la paroi (26) de la chambre de rinçage est adaptable aux différentes positions inclinées du dispositif de rinçage de telle sorte que l'anneau de glissement (25; 25a; 25b) assure alors l'étanchéité de la chambre de rinçage (20) par rapport à la surface de pièce.

2. Dispositif selon la revendication 1, caractérisé en ce que la chambre de rinçage (20) comporte en vue de son adaptation de forme aux positions inclinées du dispositif de rinçage des éléments d'adaptation (24, 26, 28; 26a) pouvant être commandés.

3. Dispositif selon la revendication 2, caractérisé en ce que les éléments d'adaptation (28) pouvant être commandés comportent un conduit d'admission (14) destiné à être relié à un circuit pour l'agent de rinçage.

4. Dispositif selon une des revendications précédentes, caractérisé en ce qu'un élément d'adaptation est agencé sous la forme d'une manchette annulaire élastique (26; 26a) formant dans l'essentiel la paroi latérale de la chambre de rinçage.

5. Dispositif selon la revendication 4, caractérisé en ce que la manchette (26) comporte à l'intérieur des chambres creuses (28) qui sont en communication fluidique (14, 24) avec une source de fluide pouvant être commandée en pression.

6. Dispositif selon la revendication 4, caractérisé en ce que tout le volume intérieur de la manchette (26) est agencé sous la forme d'une chambre annulaire (28) et la chambre (28) est en communication fluidique (14, 24) avec une source de fluide pouvant être commandée en pression.

7. Dispositif selon la revendication 4, caractérisé en ce que l'épaisseur de paroi de la manchette (26a) diminue dans la direction orientée vers l'anneau coulissant (25a).

8. Dispositif selon une des revendications précédentes, caractérisé en ce que la chambre de rinçage (20) comporte une buse de rinçage (22) pour produire un jet de rinçage dirigé vers la zone d'érosion.

9. Dispositif selon la revendication 8, caractérisé en ce que la buse de rinçage (22) est conçue pour produire un jet de rinçage à haute pression et est entourée concentriquement par une buse de rinçage enveloppant (29).

10. Dispositif selon la revendication 8, caractérisé en ce que la buse de rinçage (22) comporte des éléments de profilage de jet (40, 41) en vue d'un rinçage contrôlé de la zone d'érosion proprement dite et additionnellement également de zones adjacentes du canal de découpage.

11. Dispositif selon la revendication 10, caractérisé en ce qu'au moins une partie (45), dirigée vers la surface de pièce, de la chambre de rinçage (20) peut tourner autour de l'axe de l'électrode (1).

12. Dispositif selon la revendication 11, caractérisé en ce qu'il est prévu des éléments d'entraînement (48) pour faire tourner de façon commandée la partie (45), dirigée vers la surface de pièce, de la chambre de rinçage (20).

13. Dispositif selon la revendication 8, caractérisé en ce que les dimensions verticales de la buse de rinçage (22) et de l'anneau de glissement (25; 25b) sont dans une relation mutuelle telle que la buse de rinçage s'applique contre l'anneau de glissement (25; 25b) lors de son mouvement d'avance.

14. Dispositif selon une des revendications précédentes, caractérisé en ce que l'anneau de glissement (25b) comporte au moins une rainure sur sa surface dirigée vers la pièce.

15. Dispositif selon une des revendications 8 à 14, caractérisé en ce que la zone d'embouchure de buse de rinçage est reliée, par l'intermédiaire d'une manchette annulaire flexible (30) avec la paroi intérieure de l'anneau de glissement (25b), et la surface, dirigée vers la pièce (2), de l'anneau de glissement (25b) est reliée, par l'intermédiaire d'un canal d'alimentation (31), avec le circuit d'agent de rinçage.

FIG. 1

FIG. 2

FIG. 3a

FIG. 3b

FIG. 4a

FIG. 4b

FIG. 4c

FIG. 6

FIG. 5